Europäisches Patentamt

European Patent Office

Office européen des brevets

(19)

(11) **EP 0 674 381 B1**

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(51) Int Cl.6: **H02P 21/00**

(21) Anmeldenummer: **95104131.8**

(22) Anmeldetag: **21.03.1995**

(54) **Verfahren zur Drehmomentregelung einer Asynchronmaschine**

Torque regulation method of an asynchronous machine

Procédé de régulation du couple d'une machine asynchrone

(84) Benannte Vertragsstaaten:
**AT BE DE FR GB IT LU NL**

(30) Priorität: **23.03.1994 DE 4409936**
**15.04.1994 DE 4413153**

(43) Veröffentlichungstag der Anmeldung:
**27.09.1995 Patentblatt 1995/39**

(73) Patentinhaber: **ABB Daimler-Benz Transportation (Technology) GmbH**
**13627 Berlin (DE)**

(72) Erfinder:
- **Depenbrock, Manfred, Prof. Dr.**
 **D-44780 Bochum (DE)**
- **Maischak, Dieter**
 **D-91085 Weisendorf (DE)**

(74) Vertreter: **Luderschmidt, Schüler & Partner GbR Patentanwälte,**
**Postfach 3929**
**65029 Wiesbaden (DE)**

(56) Entgegenhaltungen:
- **PROCEEDINGS OF THE IECON'93, Bd. 3, 15.November 1993 - 19.November 1993 HAWA , Seiten 1991-1996, XP 000437540 MATS ALAKÜLA ET AL. 'An induction machine servo with one current controller and an improved flux observer.'**
- **CONFERENCE RECORD OF THE INDUSTRY APPLICATIONS SOCIETY ANNUAL MEETI, SEATTLE, OCT. 7 - 12, 1990, Bd. VOL. 1, Nr. MEETING 25, INSTITUTE OF ELECTRICAL AND ELECTRONICS ENGINEERS, Seiten 410-415, XP 000204061 XUE Y ET AL 'A LOW COST STATOR FLUX ORIENTED VOLTAGE SOURCE VARIABLE SPEED DRIVE'**
- **IEEE TRANSACTIONS ON POWER ELECTRONICS, Bd. 3, Nr. 4, Oktober 1988 Seiten 420-429, M. DEPENBROCK 'Direct Self-Control (DSC) of Inverter-Fed Induction Machine'**

EP 0 674 381 B1

**Beschreibung**

Die Erfindung bezieht sich auf ein Verfahren zur Drehmomentregelung einer Asynchronmaschine gemäß dem Oberbegriff des Anspruchs 1 und kann sowohl allgemein in Industrieantrieben als insbesondere auch bei elektrischen Schienenfahrzeugen verwendet werden.

Ziel fast aller Antriebsregelungen ist es, den Drehmoment-Istwert M der Induktionsmaschine möglichst schnell seinem Drehmoment-Sollwert $M_{soll}$ nachzuführen. Das Drehmoment pro Polpaar p der Induktionsmaschine kann z.B. aus den Raumzeigerbeträgen von Gesamtfluß $\Psi_\mu$ und Rotorfluß $\Psi_r$, sowie aus dem von diesen Raumzeigern eingeschlossenen Flußwinkel $\vartheta$ gemäß

$$\frac{M}{p} = \frac{3}{2 \bullet L\sigma} \bullet \left| \underset{\mu}{\underline{\Psi}} \right| \bullet \left| \underset{\rightarrow}{\Psi_r} \right| \bullet \sin \vartheta \tag{1}$$

berechnet werden (siehe auch etz Archiv Bd. 11 (1989), H. 1, Seite 11 bis 16), wobei

$\underset{\mu}{\underline{\Psi}} =$          Gesamtflußraumzeiger

$\underset{r}{\underline{\Psi}} =$          Rotorflußraumzeiger

$L_\sigma =$          Streuinduktivität.

Die im folgenden verwendeten Raumzeigergrößen können nach bekannten Regeln aus den entsprechenden drei Stranggrößen berechnet werden (siehe auch IEEE Transactions on power electronics, Vol. 3, No. 4, October 1988, Seite 420 bis 429). Für Flußverkettungen existieren keine praktisch brauchbaren Meßumformer, so daß diese in der Regel durch ein Maschinenmodell aus meßbaren Größen errechnet werden. Der Rotorflußraumzeiger bewegt sich im stationären Betrieb mit nahezu konstanter Winkelgeschwindigkeit auf einer Kreisbahn.

Das gewünschte möglichst verzerrungsfreie Drehmoment wird beispielsweise erreicht, wenn der Gesamtflußraumzeiger ebenfalls mit konstanter Winkelgeschwindigkeit auf einer Kreisbahn geführt wird und mit dem Rotorflußraumzeiger den Flußwinkel θ aufspannt. Dies ist unter der Voraussetzung schnell schaltender Leistungshalbleiter nahezu ideal realisierbar, denn die Pulsperiode

$$T_p = \frac{1}{2 \bullet f_T} \langle\langle T_\sigma, T_S; \; T_\sigma = \frac{L_\sigma}{Rr} \tag{2}$$

des speisenden Wechselrichters ist dann klein gegen die Rotorstreuzeitkonstante der Maschine und auch im gesamten Drehzahlbereich klein gegen die Ständerperiode. In Gleichung (2) gilt

$f_T =$          Schaltfrequenz der Leistungshalbleiter

$T_\sigma =$          Rotorstreuzeitkonstante

$T_s =$          Ständerperiode

$R_r =$          Rotorwiderstand.

Dies erlaubt in guter Näherung die vereinfachende Annahme, daß sich das pulsfrequent abgetastete System quasi-kontinuierlich verhält und Differentiale gemäß

$$\text{d/dt} \Leftrightarrow \Delta/Tp \tag{3}$$

in Differenzen übergehen. In den weiteren Herleitungen können daher für alle Größen zunächst kontinuierliche Zeitverläufe angenommen werden.

Der Rotorfluß einer Kurzschlußläufer-Asynchronmaschine kann sich nur langsam ändern, so daß schnelle Drehmomentänderungen prinzipiell nur durch Verändern des Gesamtflußbetrags oder des Flußwinkels zwischen Gesamtfluß und Rotorfluß erzielt werden können.

Um den Leistungsteil des Antriebs bereits im stationären Betrieb optimal auszunutzen, muß die Induktionsmaschine das geforderte, möglichst große Drehmoment stets mit minimalem Ständerstrom bei maximalem Ständerspannungsbetrag, also entsprechend maximal möglichem Gesamtflußbetrag erzeugen. Der maximale Gesamtflußbetrag muß jedoch mit Rücksicht auf die Sättigung des Statoreisens auf den Bemessungsfluß $\hat{\Psi}_o$ begrenzt werden.

Damit verbleibt nur noch die Möglichkeit, das Drehmoment dynamisch über den Flußwinkel zu verstellen. Die Ständerkreisfrequenz $\omega_S$, mit der die elektrischen Größen in den Ständerwicklungen der Induktionsmaschine schwingen, entspricht im stationären Betrieb der Summe aus der elektrisch wirksamen Winkelgeschwindigkeit $\omega$ des Rotors gegenüber dem Ständer und der Rotorkreisfrequenz $\omega_r$ (kurz Rotorfrequenz), mit der die elektrischen Größen im Rotor schwingen. Zur dynamischen Drehmomentverstellung muß die Ständerkreisfrequenz des in die Ständerwicklungen eingespeisten Drehspannungssystems (kurz Ständerfrequenz) zusätzlich einen zur Änderungsgeschwindigkeit des Flußwinkels $\vartheta$ proportionalen dynamischen Anteil $\dot{\vartheta}$ enthalten. Man erhält die Ständerfrequenz gemäß Gleichung

$$\omega_S = \omega + \omega_r + \dot{\vartheta} = \tilde{\omega}_S + \dot{\vartheta} \qquad (4)$$

wobei $\tilde{\omega}_S$ = stationäre Ständerfrequenz.

Die elektrisch wirksame Winkelgeschwindigkeit $\omega$ des Rotors gegenüber dem Ständer (im folgenden kurz als elektrische Drehzahl bezeichnet) ist durch das Produkt aus der Polpaarzahl p und der mechanischen Winkelgeschwindigkeit (Kreisfrequenz) $\Omega$ des Rotors gemäß

$$\omega = p \bullet \Omega \qquad (5)$$

gegeben. Die Rotorfrequenz ist bei Kenntnis des Rotorwiderstandes und dem leicht zu berechnenden Quadrat des Rotorflußbetrages $|\underline{\Psi}_r|^2$ eindeutig durch das Drehmoment gemäß

$$\omega_r = \frac{2 \bullet R_r}{3} \bullet \frac{M}{\left|\underset{\rightarrow}{\Psi}_r\right|^2} \qquad (6)$$

bestimmt.

Ziel aller bekannten Drehmomentregelungen für Induktionsmaschinen ist es, die in Gleichung (4) angegebene Ständerfrequenz so einzustellen, daß das Drehmoment seinem Sollwert mit möglichst guter Dynamik folgt und Soll- und Istmoment stationär übereinstimmen.

Zur Lösung dieser Aufgabe werden zunehmend pulswechselrichtergespeiste Drehstromantriebe eingesetzt. Sie werden vielfach mit der sogenannten "Feldorientierten Regelung" ausgestattet. Dieses Regelkonzept besitzt jedoch folgende Nachteile:

1. Die Realisierung der Regelung in einem am Rotorflußraumzeiger orientierten Koordinatensystem verlangt zwei recht aufwendige Koordinatentransformationen, da benötigte Meßgrößen stets in ruhenden Koordinaten vorliegen. Die Sollstrangspannungen für die den speisenden Pulswechselrichter ansteuernde Pulsweitenmodulation (PWM) müssen ebenfalls in ruhenden Koordinaten vorliegen. Für die Koordinatentransformation in das gewählte rotorflußfeste Bezugssystem muß der in der Regel als Integral der Drehzahl des Rotors gegenüber dem Ständer ermittelte Rotordrehwinkel $\varepsilon$ sowie der Lagewinkel $\varepsilon_r$ des Rotorflußraumzeigers $\underline{\Psi}_r$ relativ zum Rotor $\varepsilon_r = \int \omega_r dt$ sehr genau bestimmt werden. Dabei führen Integrationsfehler, insbesondere bei hoher Drehzahl, leicht zu instabilem Verhalten. Des weiteren müssen aus dem Transformationswinkel die trigonometrischen Funktionen sin und cos ausreichend genau berechnet werden, wozu in der Regel eine umfangreiche Sin/Cos-Tabelle im Datenspeicher abgelegt werden muß.

2. Gute Drehmomentdynamik wird nur bei ausreichender Regelreserve für die Ständerspannungsamplitude erzielt, d.h. die Ständerspannungsamplitude kann nicht bereits im stationären Betrieb maximal sein. Die stationäre Ausnutzung des Antriebs ist demnach nicht optimal.

3. Die im Feldschwächbetrieb aufgrund der technisch begrenzten Ständerspannungsamplitude prinzipiell nötige betriebspunktabhängige Einstellung des Gesamtflußbetrages wird gesteuert ausgeführt, wobei die Steuergesetzmäßigkeiten auf aufwendigen Berechnungen basieren. Sie liegen daher in der Regel nicht in geschlossener Form vor und sind auf Mikrocontrollern nur recht aufwendig, z.B. mittels Kennlinien, näherungsweise realisierbar.

4. Bislang ist in rotorflußfesten Koordinaten keine geeignete Strategie zur dynamischen Drehmomentverstellung ohne Regelreserve der Ständerspannungsamplitude bekannt, so daß insbesondere im Feldschwächbereich keine zufriedenstellende Drehmomentdynamik erzielt wird.

Das in etz Archiv Bd. 11,... (1989) H1; Seiten 11-16 vorgestellte Verfahren umgeht zwar aufgrund der Darstellung in ruhenden Koordinaten die vorstehend unter Ziffer 1 als Nachteil benannten Transformationen in rotorflußfeste Koordinaten.

Es verbleiben aber folgende Nachteile:
Die vorstehend unter Ziffer 3 aufgeführte Einstellung des Gesamtflußbetrags wird im Feldschwächbereich durch einen PI-Regler durchgeführt. Dadurch entfällt zwar die Berechnung der Steuerkennlinien, aber gute Drehmomentdynamik wird auch bei diesem Verfahren erst mit großer Regelreserve der Ständerspannungsamplitude erzielt.

Nachteilig ist weiterhin, daß das Einschwingverhalten der Regelung maßgeblich durch den integralen Anteil des Drehmomentreglers bestimmt wird. Das ist bei der dort gewählten Strategie unvermeidbar, da der integrale Anteil des Drehmomentreglers im stationären Betrieb stets der stationären Ständerfrequenz $\bar{\omega}_S$ gemäß Gleichung (4) entsprechen muß. Sie nimmt bei hoher Drehzahl große Werte an, so daß der Integralanteil nicht begrenzt werden kann. Bei dynamischen Betriebspunktänderungen treten daher unerwünschte Einschwingvorgänge auf.

Des weiteren wird der Spannungsabfall über dem Ständerwiderstand $R_s$ nicht explizit berücksichtigt, so daß er ebenfalls implizit in den Integralanteilen von Drehmoment- und Gesamtflußbetragsregler enthalten sein muß.

Der Erfindung liegt die Aufgabe zugrunde, ein Verfahren zur Drehmomentregelung einer Asynchronmaschine der eingangs genannten Art anzugeben, das eine hochdynamische Drehmomentregelung im gesamten Drehzahlbereich eines hochausgenutzten Drehfeldantriebes gewährleistet.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile liegen insbesondere darin, daß infolge der indirekten Drehmomentregelung durch Rotorfrequenzregelung gleichzeitig eine optimale stationäre Ausnutzung der Maschine und eine sehr gute Regeldynamik (Drehmomentdynamik) erzielt werden, ohne daß dabei aufwendige Rechenoperationen notwendig sind. Trotz des Verzichts auf jegliche dynamische Regelreserven der Wechselrichteransteuerung ($d$ =1=konst., siehe Gleichung (16)) wird das Drehmoment ohne Einschwingvorgänge (Überschwingen) angeregt.

Der Verzicht auf die dynamische Regelreserve der Ständerspannungsamplitude (keine Spannungsstellreserve, d.h. stets maximal mögliche Ständerspannungsamplitude) erlaubt es, die Induktionsmaschine bereits im stationären Betrieb mit maximaler Ständerspannungsamplitude zu speisen. Dadurch wird das geforderte Drehmoment mit minimalem Ständerstrom erzeugt und der Leistungsteil ohne Dynamikverlust optimal ausgenutzt.

Bemerkenswert ist, daß der Ständerstrombetrag während der dynamischen Vorgänge keine nennenswerte Erhöhung gegenüber dem stationären Betrieb aufweist. Dies bedeutet, daß der Leistungsteil trotz der guten Dynamik bezüglich des Stroms nicht überdimensioniert werden muß.

Basierend auf der indirekten Drehmomentregelung durch Rotorfrequenzregelung können die zur Hochausnutzung des Antriebs notwendigen Schutzmaßnahmen Kippschutz und Strombegrenzung auf einfache Weise realisiert werden.

Vorteilhafte Ausgestaltungen der Erfindung sind in den Unteransprüchen gegekennzeichnet.

Die Erfindung wird nachstehend anhand der in der Zeichnung dargestellten Ausführungsbeispiele erläutert. Es zeigen:

Figur 1   die gewählte Koordinatentransformation am Beispiel der Ständerspannung,
Figur 2   ein Blockschaltbild der Drehmoment- und Gesamtflußbetragsregelung mit indirekter Drehmomentregelung durch Rotorfrequenzregelung,
Figur 3   eine Drehmomentregelung mit exakter Ständerfrequenz-Vorsteuerung für optimale Drehmomentdynamik,
Figur 4   die Bahnkurve des Gesamtflußraumzeigers im Feldschwächbetrieb beim Wechsel von einem stationären Betriebspunkt in einen neuen mit höherem Drehmoment,
Figur 5   eine Grundstruktur der Drehmomentregelung durch unterlagerte Gesamtflußbetragsregelung,
Figur 6   eine Drehmomentregelung mit exakter Vorsteuerung des Gesamtflußbetrags und Spannungsamplitudenverstellung,
Figur 7   eine Drehmomentreglung mit dynamischer Feldschwächung mit begrenztem Spannungswinkel.

Der Raumzeiger $\underline{u}$ der im Mittel pro Pulsperiode an die Ständerklemmen der Induktionsmaschine anzulegenden Ständerspannung ergibt sich mit der in den Gleichungen (2, 3) gemachten Voraussetzung direkt aus der Ständergleichung des Maschinenmodells. Man erhält den Ständerspannungsraumzeiger als Summe des Spannungsabfalls $\underset{\rightarrow}{e}_R$ am Ständerwiderstand und der Magnetisierungsspannung $\underset{\rightarrow}{e}_\Psi$, die im ständerfesten Koordinatensystem der zeitlichen Änderung des Gesamtflußraumzeigers $\dot{\underset{\rightarrow}{\Psi}}_\mu$ entspricht, gemäß

$$\underset{\rightarrow}{e}_s = \underset{\rightarrow}{e}_R + \underset{\rightarrow}{e}_\Psi = R_s \bullet \underset{\rightarrow}{i}_s + \dot{\underset{\rightarrow}{\Psi}}_\mu \; ; \; mit\ (2,3): \; \dot{\underset{\rightarrow}{\Psi}}_\mu = \frac{\Delta \underset{\rightarrow}{\Psi}_\mu}{T_p} \qquad (7)$$

Der Ständerstromraumzeiger $\underset{\rightarrow}{i}_s$ kann in analoger oder digitaler Form leicht meßtechnisch erfaßt werden. Den Gesamtflußraumzeiger erhält man mit Hilfe der Ständergleichung des Maschinenmodells gemäß

$$\underset{\rightarrow}{\Psi}_\mu = \int \left( \underset{\rightarrow}{e}_s - R_s \bullet \underset{\rightarrow}{i}_s \right) dt = \left| \underset{\rightarrow}{\Psi}_\mu \right| \bullet e^{jX_\mu} \qquad (8)$$

Seine Phasenlage $X_\mu$ entspricht dabei direkt dem für die Transformation in gesamtflußfeste Koordinaten benötigten Transformationswinkel, für den entsprechend Gleichung (8) folgender einfacher Zusammenhang gilt

$$e^{jX_\mu} = \frac{\underset{\rightarrow}{\Psi}_\mu}{\left| \underset{\rightarrow}{\Psi}_\mu \right|} \qquad (9)$$

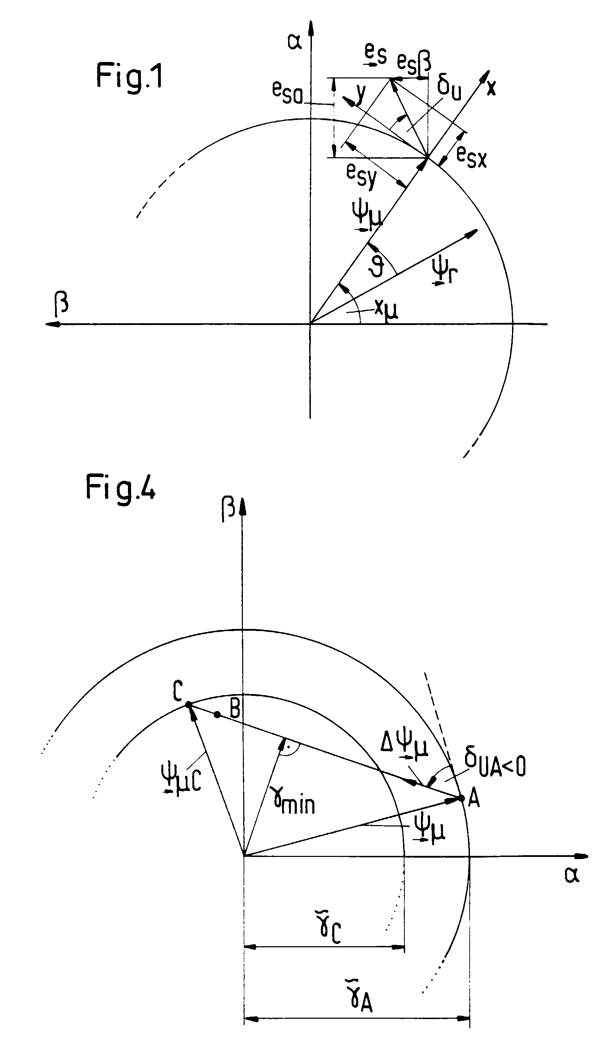

Die hier gewählte Koordinatentransformation ist zur Verdeutlichung in Figur 1 am Beispiel der Ständerspannung $\underset{\rightarrow}{e}_s$ dargestellt:

$\alpha,\beta =$ ruhende Koordinaten
x,y = gesamtflußorientierte, mit $\underset{\rightarrow}{\Psi}_\mu$ rotierende Koordinatenachsen,
$\delta_u =$ Spannungswinkel zwischen $\underset{\rightarrow}{e}_s$ und um +90° gedrehtem $\underset{\rightarrow}{\Psi}_\mu$.

Es gilt folgende einfache Transformationsgleichung:

$$\underset{\rightarrow}{e}_s = e_{s\alpha} + j \bullet e_{s\beta} = \underset{\rightarrow}{e}_{sx.y} \bullet e^{jX_\mu} = \left( e_{Sx} + j \bullet e_{sy} \right) \bullet e^{jX_\mu} \qquad (10)$$

wobei

es$\alpha$, es$\beta$ = Koordinaten von $\underset{\rightarrow}{e}_s$ im $\alpha/\beta$-System
esx, esy = Koordinaten von $\underset{\rightarrow}{e}_s$ im x/y-System.

Differentiation des in Gleichung (8) berechneten Gesamtflußraumzeigers und Einsetzen des Ergebnisses in die Ständergleichung (7) führt mit $\dot{X}_\mu = \omega_s$ auf folgende Bestimmungsgleichung für die einzustellende Ständerspannung $\underset{\rightarrow}{e}_s$:

$$\underset{\rightarrow}{e}_S = \underset{\rightarrow}{e}_R + \left[ \left| \dot{\underset{\rightarrow}{\Psi}}_\mu \right| + j\omega_s \left| \underset{\rightarrow}{\Psi}_\mu \right| \right] \bullet \frac{\underset{\rightarrow}{\Psi}_\mu}{\left| \underset{\rightarrow}{\Psi}_\mu \right|} = \left[ \left( e_{Rx} + e_{\Psi y} \right) + j \bullet \left( e_{Ry} + e_{\Psi y} \right) \right] \bullet e^{jX_\mu} \qquad (11)$$

wobei

$e_{Rx}, e_{Ry} =$            Koordinaten von $\underline{e}_R$ im x/y-System

$e_{\Psi x}, e_{\Psi y} =$           Koordinaten von $\underline{e}_\Psi$ im x/y-System.

Gleichung (11) enthält keine trigonometrischen Funktionen, so daß keine Sin/Cos-Tabelle benötigt wird. Man erkennt darin direkt die in Figur 1 dargestellte Aufteilung der Ständerspannung in eine zum Gesamtflußraumzeiger parallele Komponente $e_{sx}$ und eine dazu orthogonale Komponente $e_{sy}$.

Die parallel zum Gesamtflußraumzeiger orientierte Komponente der Ständerspannung verändert bzw. korrigiert den Gesamtflußbetrag. Ihr Betrag $e_{sx}$ wird nachstehend als Flußkorrekturfaktor bezeichnet.

Der als Ständerfrequenzfaktor bezeichnete Betrag $e_{sy}$ der zum Gesamtflußraumzeiger orthogonalen Komponente der Ständerspannung ist proportional zur Ständerfrequenz und ermöglicht somit die Drehmomentverstellung.

Die einfachste Realisierung einer Drehmoment-und Gesamtflußbetragsregelung erhält man, wenn der Flußkorrekturfaktor $e_{SX}$ als Stellgröße eines Gesamtflußbetragsreglers mit PI-Charakteristik gemäß der nachfolgenden Gleichung (12) und der Ständerfrequenzfaktor $e_{sy}$ durch einen PI-Drehmomentregler entsprechend der nachfolgenden Gleichung (13) eingestellt werden. Es gilt:

$$e_{Sx} = V_\Psi \bullet \left( \Psi_{soll} - \left| \underset{\rightarrow}{\Psi} \mu \right| \right) + \frac{1}{\tau_\Psi} \bullet \int \left( \Psi_{soll} - \left| \underset{\rightarrow}{\Psi} \mu \right| \right) dt \qquad (12)$$

und

$$e_{Sy} = V_M \bullet (M_{soll} - M) + \frac{1}{\tau_M} \bullet \int (M_{soll} - M) \, dt \qquad (13)$$

wobei

$V_\Psi =$          P-Verstärkung des Gesamtflußbetragreglers

$\tau_\Psi =$          Nachstellzeit des Gesamtflußbetragreglers

$\Psi_{soll} =$          Flußsollwert

$V_M =$          P-Verstärkung des Drehmomentreglers

$\tau_M =$          Nachstellzeit des Drehmomentreglers

Wie bereits erwähnt, ist der I-Anteil des Drehmomentreglers bei fehlender Ständerfrequenzvorsteuerung zwingend erforderlich, da er dann die stationäre Ständerfrequenz einstellt.

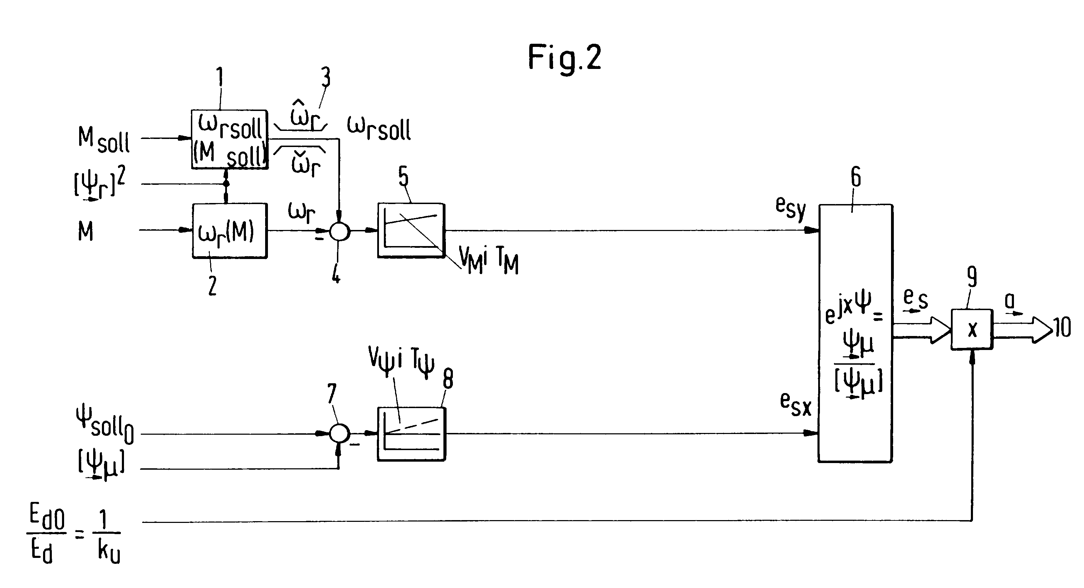

In Figur 2 ist ein Blockschaltbild der Drehmoment- und Gesamtflußbetragsregelung mit indirekter Drehmomentregelung durch Rotorfrequenzregelung dargestellt, wie sie zur Drehmomentregelung im Spannungsstellbereich (Amplitudenverstellung) dient. Es sind zwei Rechner 1, 2 zu erkennen, wobei Rechner 1 $M_{soll}$ und $\left| \underset{\rightarrow}{\Psi} \right|$ empfängt und einen Rotorkreisfrequenzsollwert $\omega_{rsoll}$ nach der Gleichung

$$\omega_{rsoll} = \frac{3R_r}{2} \frac{M_{soll}}{\left| \Psi_l \right|^2} \qquad (6a)$$

berechnet sowie Rechner 2 das Drehmoment M und $\left| \underset{\rightarrow}{\Psi} \right|$ empfängt und die Rotorkreisfrequenz $\omega_r$ nach der Gleichung

$$\omega_r = \frac{3R_r}{2} \frac{M}{\left| \Psi_l \right|^2} \qquad (6)$$

berechnet. Ein Subtrahierer 4 bildet $\omega_{rsoll} - \omega_r$, wobei $\omega_{rsoll}$ zuvor mittels eines Begrenzers 3 auf einen positiven bzw. negativen Scheitelwert $\hat{\omega}$, bzw. $\check{\omega}$, begrenzt wird. Die vom Subtrahierer 4 ermittelte Differenz gelangt zu einem Rotorfrequenzregler 5 (bei der Anordnung gemäß Figur 2 vorzugsweise ein PI-Regler), dessen Ausgangssignal dem Ständerfrequenzfaktor $e_{sy}$ entspricht und einem Koordinatentransformator 6 zugeführt wird.

Ein Subtrahierer 7 bildet die Differenz $\Psi_{soll\,o} - \left| \underset{\rightarrow}{\Psi} \right|$, wobei $\Psi_{sollo}$ dem Bemessungsflußsollwert entspricht, und führt diese Differenz einem Gesamtflußbetragsregler 8 (bei der Anordnung gemäß Figur 2 vorzugsweise ein PI-Regler) zu, dessen Ausgangssignal dem Flußkorrekturfaktor $e_{sx}$ entspricht und ebenfalls dem Koordinatentransformator 6 zugeführt wird. Dem Koordinatentransformator 6 ist ausgangsseitig der Ständerspannungsraumzeiger $\underrightarrow{e}^{s}$ entnehmbar. Um den Einfluß von Schwankungen der Gleichspannung zu vermeiden, bildet ein Multiplizierer 9 bildet das Produkt aus $\underrightarrow{e}^{s}$ und

$$\frac{E_{d0}}{E_d} = \frac{1}{K_u}$$

wobei $E_d$ der Zwischenkreisgleichspannung und $E_{d0}$ der Bemessungs-Zwischenkreisgleichspannung entsprechen und $k_u$ als Spannungsfaktor definiert ist. Der Multiplizierer 9 gibt ausgangsseitig den Raumzeiger $\underrightarrow{a}$ der Wechselrichteraussteuerung im ruhenden $\alpha/\beta$-Koordinatensystem an einen Pulsweitenmodulator 10 zur Ansteuerung der Leistungshalbleiter eines Wechselrichters ab. Die Schaltfrequenz der Leistungshalbleiter liegt bei 1 kHz oder darüber.

Wesentlich bei der Regelung gemäß Figur 2 ist es, daß Drehmomentsollwert und -istwert zunächst gemäß Gleichung (6) in die entsprechenden Rotorfrequenzen umgerechnet werden und daß das Drehmoment durch den Regler 5 indirekt über die Rotorfrequenz entsprechend

$$e_{Sy} = V_M \bullet (\omega_{rsoll} - \omega_r) + \frac{1}{\tau_M} \bullet \int (\omega_{rsoll} - \omega_r) dt \qquad (14)$$

geregelt wird. Dies ist vorteilhaft, da sich Kippschutz und Strombegrenzung, wie nachfolgend noch beschrieben, leicht durch geeignete Begrenzungsfunktionen (z.B. Gleichung (30a, 30b) des Rotorfrequenzsollwerts $\omega_{rsoll}$ realisieren lassen.

Die Stellgrößen der Regler für Gesamtflußbetrag und Rotorfrequenz erzeugen direkt die zum Gesamtflußraumzeiger parallele Koordinate $e_{sx}$ des Ständerspannungsraumzeigers (= Flußkorrekturfaktor) und die dazu orthogonale Koordinate $e_{sy}$ (= Ständerfrequenzfaktor). Sie enthalten implizit den Spannungsabfall über dem Ständerwiderstand $R_S$. Die anschließend gemäß Gleichung (9) durchgeführte Koordinatentransformation, die lediglich der Berücksichtigung der aktuellen Phasenlage des Gesamtflußraumzeigers entspricht, liefert den Ständerspannungsraumzeiger $\underrightarrow{e}^{s}$ in ruhenden Koordinaten. Schließlich wird der Ständerspannungsraumzeiger noch mit dem Kehrwert des als Spannungsfaktor

$$k_u = \frac{E_d}{E_{d0}} \qquad (15)$$

bezeichneten Verhältnisses aus der gemessenen Zwischenkreisgleichspannung $E_d$ und Bemessungs-Zwischenkreisgleichspannung $E_{d0}$ multipliziert.

Die Bemessungs-Zwischenkreisgleichspannung $E_{d0}$ wird zur Vermeidung von Übersteuerungen des Wechselrichters, sofern diese unzulässig sind, so gewählt, daß der Wechselrichter bei maximaler Sinusaussteuerung genau die Bemessungständerspannung $\hat{e}_0$ der gespeisten Induktionsmaschine abgibt.

Der so berechnete Raumzeiger der Wechselrichteraussteuerung

$$\underrightarrow{a} = \frac{1}{K_u} \bullet \frac{\underrightarrow{e}^{s}}{\hat{e}_0} \qquad (16)$$

wird dann an den Pulsweitenmodulator (PWM) übergeben. Pulsweitenmodulationsverfahren sind Stand der Technik und werden an dieser Stelle nicht weiter behandelt.

Eine gegenüber der Grundversion gemäß Figur 2 deutliche Verbesserung des Drehmoment-Anregelverhaltens erzielt man, wenn die vorstehend beschriebene Rotorfrequenzregelung durch eine geeignete Vorsteuerung der stationären Ständerfrequenz $\tilde{\omega}_s$ ergänzt wird.

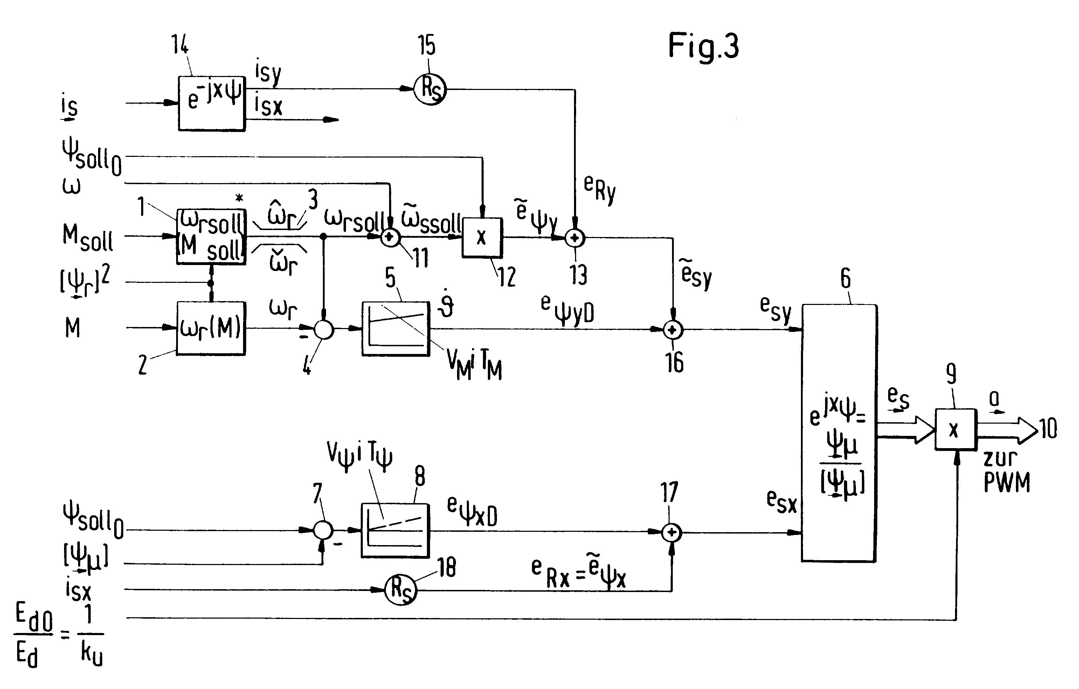

In Figur 3 ist hierzu eine Drehmomentregelung mit exakter Ständerfrequenzvorsteuerung für optimale Drehmomentdynamik dargestellt. Die Grundanordnung ist wie unter Figur 2 gezeigt. Die zusätzlichen Komponenten der Regelung werden nachfolgend erläutert.

Ein Addierer 11 summiert $\omega_{soll}$ und $\omega$ und führt den derart gebildeten stationären Ständerkreisfrequenzsoll-

wert $\tilde{\omega}_{s\,soll}$ einem Multiplizierer 12 zu. Der Multiplizierer 12 errechnet die zum Gesamtflußraumzeiger orthogonale stationäre Komponente $\tilde{e}_{\Psi y}$ der Magnetisierungsspannung als Produkt aus $\tilde{\omega}_{s\,soll}$ und $\Psi_{soll\,0}$ und führt diese einem Addierer 13 zu, der aus $e_{Ry}$ und $\tilde{e}_{\Psi y}$ den stationären Ständerfrequenzfaktor $\tilde{e}_{sy}$ bildet und einem zwischen Rotorfrequenzregler 5 und Koordinatentransformator 6 angeordneten Addierer 16 zuleitet. Zur Bildung von $e_{Ry}$ ist ein Koordinatentransformator 14 vorgesehen, der aus $\underline{i}_s$ die Komponenten $i_{sx}$ und $i_{sy}$ des Ständerstromraumzeigers im x/y-System berechnet. Ein Multiplizierer 15 bildet das Produkt $e_{Ry} = i_{sy} \cdot R_s$. Zwischen Gesamtflußbetragsregler 8 und Koordinatentransformator 6 ist ein Addierer 17 angeordnet, dem $e_{Rx} = \tilde{e}_{\Psi x}$ sowie e$\Psi$xD zugeführt werden, wobei ein Multiplizierer 18 das Produkt $e_{Rx} = i_{sx} \cdot R_s$ bildet.

Wesentlich bei der Ständerfrequenzvorsteuerung gemäß Figur 3 ist es, daß sie auf einfachen analytischen Gleichungen beruht, die auch auf Signalprozessoren unter Echtzeitbedingungen exakt lösbar sind. Zunächst wird der Sollwert der stationären Ständerfrequenz $\tilde{\omega}_{s\,soll}$ gemäß Gleichung (4) als Summe der elektrischen Drehzahl $\omega$ und dem entsprechend Gleichung (6) aus dem Drehmomentsollwert berechneten Rotorfrequenzsollwert $\omega_{rsoll}$ ermittelt.

Durch Multiplikation des stationären Ständerfrequenzsollwertes mit dem Bemessungs-Gesamtflußsollwert $\Psi_{\mu soll\,0}$ erhält man mit Gleichung (11) direkt die im stationären Betrieb mit konstantem Gesamtflußbetrag einzustellende, zum Gesamtflußraumzeiger orthogonale Komponente $\tilde{e}_{\Psi y}$ des Magnetisierungsspannungsraumzeigers.

Des weiteren wird dazu der zum Gesamtflußraumzeiger orthogonale Anteil $e_{Ry}$ des Spannungsabfalls über dem Ständerwiderstand addiert und man erhält den stationären Wert des zum Gesamtflußraumzeiger orthogonalen Anteils $\tilde{e}_{sy}$ der Ständerspannung (=stationärer Ständerfrequenzfaktor). Die dazu durchgeführte Koordinatentransformation des Ständerstromraumzeigers $\underline{i}_s$ entspricht lediglich einer Multiplikation mit dem konjugiert komplexen Gesamtflußraumzeiger $\underline{\psi}_\mu$ und anschließender Division durch den Gesamtflußbetrag $|\underline{\Psi}_\mu|$. Diese Operationen können auf einem Signalprozessor auch unter Echtzeitbedingungen mit geringem Aufwand exakt ausgeführt werden.

Der Rotorfrequenzregler liefert als Stellgröße jetzt nur noch den zur Flußwinkeländerung erforderlichen dynamischen steil $\dot{\vartheta}$ der Ständerfrequenz (= dynamischer Ständerfrequenzfaktoranteil). Dieser verschwindet im stationären Betrieb und der I-Anteil des Rotorfrequenzreglers kann theoretisch entfallen, da die Ständerfrequenz stationär exakt vorgesteuert wird. In der Praxis korrigiert er jedoch Vorsteuerfehler, die durch Fehlabstimmung der Modellparameter oder Meßfehler verursacht werden können.

Diese sind jedoch so klein, daß der I-Anteil auf sehr kleine Werte begrenzt werden kann und keinen Einfluß mehr auf das dynamische Drehmomentanregelverhalten hat. Das Drehmoment kann dadurch sehr schnell und ohne Überschwingen angeregt werden.

Es ist konsequent, auch den Betrag $e_{Rx}$ der zum Gesamtflußraumzeiger parallelen Komponente des Spannungsabfalls am Ständerwiderstand vorzusteuern, denn der Gesamtflußbetragsregler ist dann ebenfalls stationär entlastet und kann als einfacher P-Regler ausgeführt werden. Er greift nur noch ein, wenn der Gesamtflußbetrag verändert werden soll.

Bei unbegrenztem Betrag des Ständerspannungsraumzeigers könnte die Maschine im gesamten Betriebsbereich mit dem Bemessungsfluß $\hat{\Psi}_0$ betrieben werden. Mit der vorstehend beschriebenen Rotorfrequenz- und Gesamtflußbetragsregelung könnte dann, wegen der beliebig hohen Regelreserve der Ständerspannungsamplitude, unabhängig von der Drehzahl stets eine sehr gute Drehmomentdynamik erreicht werden.

In der Praxis ist dies jedoch nicht der Fall, da der Bemessungswert der Ständerspannung $\hat{e}_0$ nicht überschritten werden kann.

Die Gleichungen (11, 16) machen deutlich, daß der Bemessungsfluß bei Vollaussteuerung des Wechselrichters ($|\underline{a}| = 1$) selbst bei Vernachlässigung des Spannungsabfalls $e_R$ am Ständerwiderstand nur bis zu einer Bemessungsfrequenz

$$\omega_0 = ku \bullet \frac{\hat{e}_0}{\hat{\Psi}_0} \tag{17}$$

beibehalten werden kann. Die Bemessungsfrequenz wird durch den Bemessungsfluß $\hat{\Psi}_0$ und die Bemessungsspannung $\hat{e}_0$ der Maschine sowie den Spannungsfaktor $k_u$ festgelegt.

Um dennoch höhere Ständerfrequenzen als die Bemessungsfrequenz $\omega_0$ einzustellen, muß der Gesamtfluß entsprechend der sogenannten Feldschwächziffer

$$\gamma = \frac{|\underline{\Psi}_\mu|}{\hat{\underline{\Psi}}_0} \tag{18}$$

EP 0 674 381 B1

so geschwächt werden, daß die dann erforderliche Ständerspannungsamplitude gerade mit vollausgesteuertem Wechselrichter erreicht wird. Dadurch wird der Leistungsteil des Antriebs bereits im stationären Betrieb optimal ausgenutzt.

Die nachfolgend beschriebene Drehmomentregelung durch unterlagerte Gesamtflußbetragsregelung (dynamische Feldschwächung) geht direkt davon aus, daß die Maschine im Feldschwächbereich stets mit maximaler konstanter Ständerspannungsamplitude gespeist wird. Für den Ständerspannungsraumzeiger gilt dann

$$\underrightarrow{e}_{s}= j \bullet \hat{e}_{0} \bullet e^{j\delta_u} \bullet e^{j\chi_\mu} \qquad\qquad (19)$$

Sein Betrag entspricht dem Bemessungswert und es kann nur noch der in Figur 1 dargestellte Spannungswinkel $\delta_u$ zwischen dem Raumzeiger der Ständerspannung und dem um +90° gedrehten Gesamtflußraumzeiger verstellt werden. Der Spannungswinkel

$$\delta_u = \alpha\tan\frac{e_{sx}}{|e_{sy}|} \qquad\qquad (20)$$

ist direkt durch das Verhältnis der Ständerspannungskoordinaten gegeben.

Wird der Wechselrichter bereits im stationären Betrieb voll ausgesteuert, steht prinzipiell keine dynamische Regelreserve der Ständerspannungsamplitude zur Verfügung und die Bahngeschwindigkeit des Gesamtflußraumzeigers kann nicht mehr erhöht werden.

Um das Drehmoment unter diesen Bedingungen noch schnell zu vergrößern, muß der Flußwinkel $\vartheta$ zwischen dem Gesamtflußraumzeiger und dem Rotorflußraumzeiger entsprechend Gleichung (1) auf andere Weise schnell vergrößert werden. Die dazu erforderliche große Änderungsgeschwindigkeit $\dot\vartheta$ des Flußwinkels kann bei konstanter Bahngeschwindigkeit des Gesamtflußraumzeigers nur durch geeignetes Abkürzen der Gesamtflußbahnkurve erreicht werden.

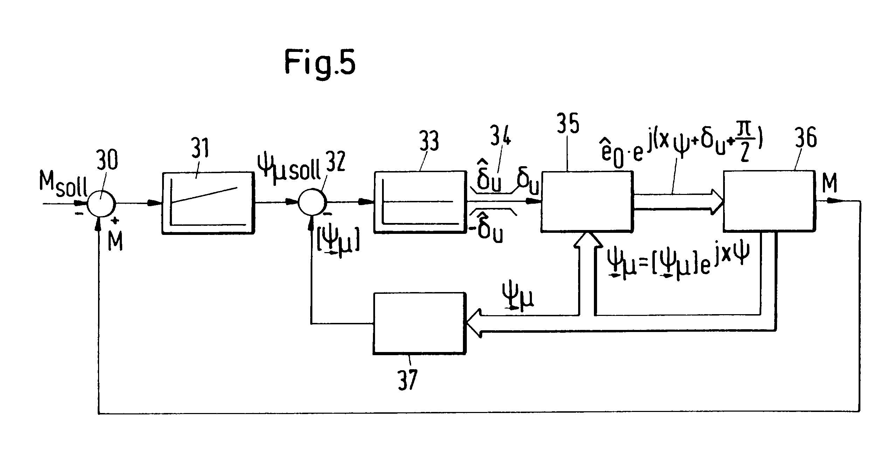

Zur Erläuterung dieses Vorganges zeigt Figur 4 beispielhaft die Bahnkurve des Gesamtflußraumzeigers im Feldschwächbetrieb beim Wechsel von einem stationären Betriebspunkt in einen neuen mit höherem Drehmoment, wobei

| | |
|---|---|
| $\tilde\gamma_C =$ | stationäre Feldschwächziffer im Punkt C, |
| $\tilde\gamma_A =$ | stationäre Feldschwächziffer im Punkt A, |
| $\underrightarrow{\Psi}_{\mu C} =$ | Gesamtflußraumzeiger im Punkt C, |
| $\gamma_{min} =$ | Feldschwächziffer-Minimum |
| $\Delta\underrightarrow{\Psi}_\mu =$ | Gesamtflußraumzeiger-Zuwachs relativ zum Punkt A |

Der Umfang der im Punkt C erreichten neuen stationären Gesamtflußkreisbahn ist wegen des erhöhten Drehmoments und der dazu erforderlichen höheren Ständerfrequenz kleiner als bei der im Punkt A verlassenen alten Kreisbahn.

Der Übergang zwischen den Betriebspunkten A, C wird optimal schnell ausgeführt, wenn der Gesamtflußraumzeiger im Punkt A durch schlagartiges Verkleinern des Spannungswinkels $\delta_u$ auf einen negativen Wert auf die als kürzest mögliche dynamische Bahnkurve gewählte lineare Verbindung zwischen A und C geführt wird. Die Verkleinerung des Spannungswinkels wird gemäß Gleichung (20) durch Verkleinern des zum Gesamtflußraumzeiger parallelen Anteils $e_{sx}$ der Ständerspannung erreicht.

Während der Gesamtflußraumzeiger die Abkürzungsbahn durchläuft, bleibt der Rotorflußraumzeiger näherungsweise auf seiner mit nahezu unveränderter Winkelgeschwindigkeit durchlaufenen stationären Bahnkurve. Dabei wird der Flußwinkel $\vartheta$ im wesentlichen allein durch die Bahnabkürzung vergrößert und das Drehmoment steigt an. Mit abnehmender Drehmomentregelabweichung wird der Spannungswinkel wieder vergrößert. Erreicht das Drehmoment - beispielsweise schon im Punkt B - seinen Sollwert, so wird die Ständerspannungsamplitude schlagartig so verkleinert, daß das Drehmoment nicht überschwingt.

Während der Gesamtflußraumzeiger dann weiter in den Punkt C läuft, werden die Aussteuerung und der Gesamtflußbetrag so verstellt, daß das Drehmoment mit dem Sollwert übereinstimmt. Erreicht der Gesamtflußraumzeiger schließlich im Punkt C seine neue stationäre Kreisbahn, wird der Gesamtflußbetrag nicht mehr verändert. Die zum Gesamtflußraumzeiger parallele Komponente $e_{sx}$ des Ständerspannungsraumzeigers wird sehr klein und der Ständerspannungsraumzeiger steht entsprechend den Gleichungen (19, 20) wieder nahezu senkrecht auf dem Gesamtflußraumzeiger. Der Spannungswinkel $\delta_u$ erreicht also wieder etwa den Wert Null, denn $\delta_u$ nimmt einen kleinen positiven Endwert an, um den Spannungsabfall am Ständerwiderstand zu decken.

Der Abbiegewinkel $\delta_{uA}$ im Punkt A bestimmt, wie schnell das Drehmoment ansteigt. Er kann entsprechend Gleichung (20) theoretisch Werte bis 90° annehmen, so daß der Gesamtflußraumzeiger dann vom Punk A in Figur 4 ausgehend direkt durch den Ursprung geführt würde. Die Maschine wäre in diesem Augenblick entregt und kein Drehmoment mehr vorhanden.

Dieser Effekt wird vermieden, wenn der Betrag des Spannungswinkels auf etwa $\delta_u = 60°$ begrenzt wird. Die Begrenzung des Spannungswinkels kann entsprechend Gleichung (20) leicht durch Einhalten der Bedingung

$$|e_{Sx}| \leq \tan 60° \bullet |e_{sy}| \tag{21}$$

realisiert werden. Der Grenzwert ist so gewählt, daß die mittlere Anstiegsgeschwindigkeit des Drehmoments maximal ist.

Figur 5 zeigt die Grundstruktur der Drehmomentregelung durch unterlagerte Gesamtflußbetragsregelung. Ein Subtrahierer 30 bildet das Signal M - $M_{soll}$ und leitet diese Differenz einem Dremomentregler 31 zu. Ein weiterer Subtrahierer 32 bildet aus dem am Ausgang des Reglers 31 anstehenden Gesamtflußsollwert $\Psi_{\mu soll}$ und dem Betrag des Gesamtflußraumzeigers $|\Psi_\mu|$ die einem Gesamtflußregler 33 zuzuleitende Differenz $\Psi_{\mu soll} - |\Psi_\mu|$. Der Regler 33 gibt ausgangsseitig den mit Hilfe eines Begrenzers 34 auf einen positiven und negativen Maximalwert $\hat{\delta}u$, - $\hat{\delta}u$ begrenzten Spannungswinkel $\delta$ an einen Koordinatentransformator 35 ab. Das Ausgangssignal

$$\hat{e}_0 \bullet e^{j\left(x_\psi + \delta u + \frac{\pi}{2}\right)}$$

des Koordinatentransformators 35 wird einem Maschinenmodell 36 zugeleitet, das hieraus das Drehmoment M und den Gesamtflußraumzeiger

$$\underline{\Psi}_\mu = \left|\underline{\Psi}_\mu\right| e^{jx_\psi}$$

bildet. $\underline{\Psi}_\mu$ wird dem Koordinatentransformator 35 und einem Betragsbildner 37 zugeführt, wobei letzterer die Größe $|\Psi_\mu|$ bildet und an den Subtrahierer 32 leitet.

Der überlagerte Drehmomentregler 31 mit PI-Charakteristik führt das Drehmoment seinem Sollwert nach, indem er dem unterlagerten Gesamtflußbetragsregler 33 mit P-Charakteristik den Radius der Gesamtflußbahnkurve vorgibt. Die Stellgröße des Gesamtflußbetragsreglers 33 entspricht dem in Gleichung (20) definierten Spannungswinkel $\delta_u$, der entsprechend Gleichung (21) begrenzt wird. Der Ständerspannungsraumzeiger ist gemäß Gleichung (19) eindeutig durch den Spannungswinkel $\delta_u$ und die Winkellage $X_\Psi$ des Gesamtflußraumzeigers gegeben. Alle für die Regelung benötigten Größen stellt das Maschinenmodell 36 bereit.

Mit der vorstehend beschriebenen Grundstruktur ohne dynamische Regelreserve der Ständerspannungsamplitude wird ein gutes Drehmomentanregeverhalten erzielt.

Wird der Drehmomentsollwert sprunghaft vom Leerlauf auf das bei der gegebenen Drehzahl maximal erreichbare Moment erhöht, so folgt das Drehmoment dem Sollwert trotz konstanter Ständerspannungsamplitude mit guter Dynamik. Der Gesamtflußraumzeiger wird schlagartig auf eine anfangs nahezu lineare Abkürzungsbahn geführt. Aufgrund der eingesetzten linearen Regler für Drehmoment und Gesamtflußbetrag bleibt die Abkürzungsbahn jedoch nicht linear, sondern schmiegt sich bei abnehmender Regelabweichung an die neue stationäre Kreisbahn an. Ihre Länge ist daher nicht minimal und die Anregelzeit entsprechend etwas länger als theoretisch möglich.

Erreicht das Drehmoment seinen Sollwert, so schwingt es ohne weitere Maßnahme über, denn der vom Integralanteil des Drehmomentreglers in diesem Augenblick eingestellte Gesamtflußsollwert ist noch zu klein.

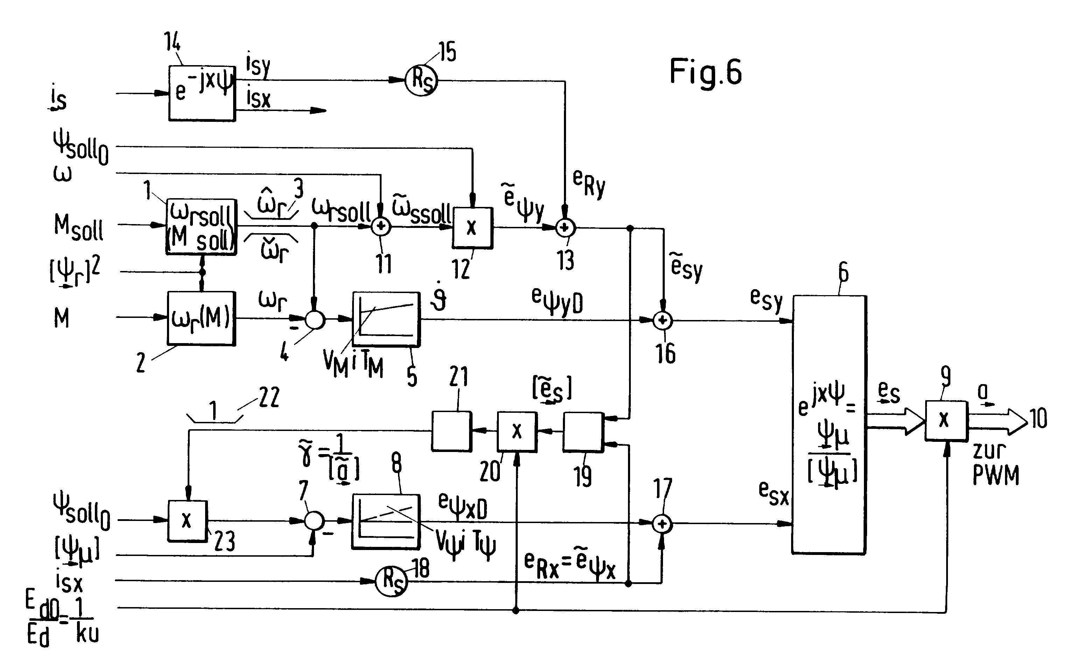

Um das Überschwingen des Drehmoments zu verhindern, muß und kann die Ständerspannungsamplitude und damit die Bahngeschwindigkeit des Gesamtflußraumzeigers in dem Augenblick schlagartig reduziert werden, in dem das Drehmoment seinen Sollwert erreicht. Wie die Ständerspannungsamplitude verkleinert werden kann, wird unter Figur 6 beschrieben.

In Figur 6 ist eine Drehmomentregelung mit exakter Vorsteuerung des Gesamtflußbetrags und Spannungsamplitudenverstellung dargestellt. Die Grundstruktur ist wie unter den Figuren 2 und 3 beschrieben. Die Signale $e_{Rx} = \underline{\bar{e}}_\Psi x$ und $e_{sy}$ werden einem Betragsbildner 19 zugeführt, der hieraus den stationären Betrag $|\underline{e}_s|$ des Ständerspan-

nungsraumzeigers bildet. Ein Multiplizierer 20 erzeugt das Produkt aus $|\underline{a}|$ und 1/ku und führt dieses einem Reziprokwertbildner 21 zu. Die am Ausgang des Reziprokwertbildners 21 abgreifbare stationäre Feldschwächziffer

$$\tilde{\gamma} = \frac{1}{\left|\underset{\rightarrow}{\tilde{a}}\right|}$$

wird mit Hilfe eines Begrenzers 22 auf Werte kleiner oder gleich 1 begrenzt und einem Multiplizierer 23 zugeleitet ($|\underline{a}|$ = stationärer Betrag des Raumzeigers der Wechselrichteraussteuerung). Der Multiplizierer bildet das Produkt aus $\Psi_{\text{soll 0}}$ und der auf 1 begrenzten stationären Feldschwächziffer $\tilde{\gamma}$ und führt dieses dem Subtrahierer 7 zu.

Es ist bereits vorstehend gezeigt, daß das dynamische Verhalten eines Regelsystems erheblich verbessert wird, wenn die Integralanteile der Regler durch geeignete Vorsteuerungen ersetzt werden. Deshalb wird der in der Grundstruktur durch den I-Kanal des Drehmomentreglers stationär eingestellte Gesamtflußbetrag mittels der zusätzlichen Maßnahmen nach Figur 6 exakt vorgesteuert.

Zunächst wird der Betrag $|\underline{a}|$ der Wechselrichteraussteuerung entsprechend Gleichung (16) für den Fall berechnet, daß die gewünschte stationäre Ständerfrequenz unter Beibehaltung des Bemessungsflusses erreicht werden könnte. Der Kehrwert dieses Aussteuerungsbetrages wird anschließend als stationäre Feldschwächziffer $\tilde{\gamma}$ gemäß

$$\tilde{\gamma} = \frac{1}{\left|\underset{\rightarrow}{\tilde{a}}\right|} = ku \bullet \frac{\hat{e}_0}{\left|\underset{\rightarrow}{\tilde{e}}_s\right|} \qquad\qquad (22)$$

eingestellt. Dadurch wird erreicht, daß die geforderte Ständerfrequenz genau mit maximaler Ständerspannungsamplitude erreicht wird. Die anschließende Begrenzung der Feldschwächziffer auf Werte kleiner als 1 verhindert, daß Ständerfrequenzen unterhalb der Bemessungsfrequenz mit unzulässig hohem Gesamtflußbetrag eingestellt werden.

Der Gesamtflußbetragregler 8 erhält vorgesteuert den Gesamtflußsollwert

$$\Psi_{\mu soll} = \Psi_{\mu soll\,0} \bullet \tilde{\gamma} \qquad\qquad (23)$$

Er entspricht dem Produkt aus dem im Spannungstellbereich eingestellten Gesamtflußsollwert $\Psi_{\text{soll 0}}$ und der gemäß Gleichung (22) berechneten stationären Feldschwächziffer $\tilde{\gamma}$.

Bei der unter Figur 6 beschriebenen Regelung wird das Überschwingen des Drehmoments nach dem Erreichen des Sollwerts durch schlagartige Reduzierung der Ständerspannungsamplitude vermieden. Des weiteren ist die vorgestellte Regelstruktur wegen des geringen Aufwands auch unter Echtzeitbedingungen auf einem Signalprozessor leicht realisierbar.

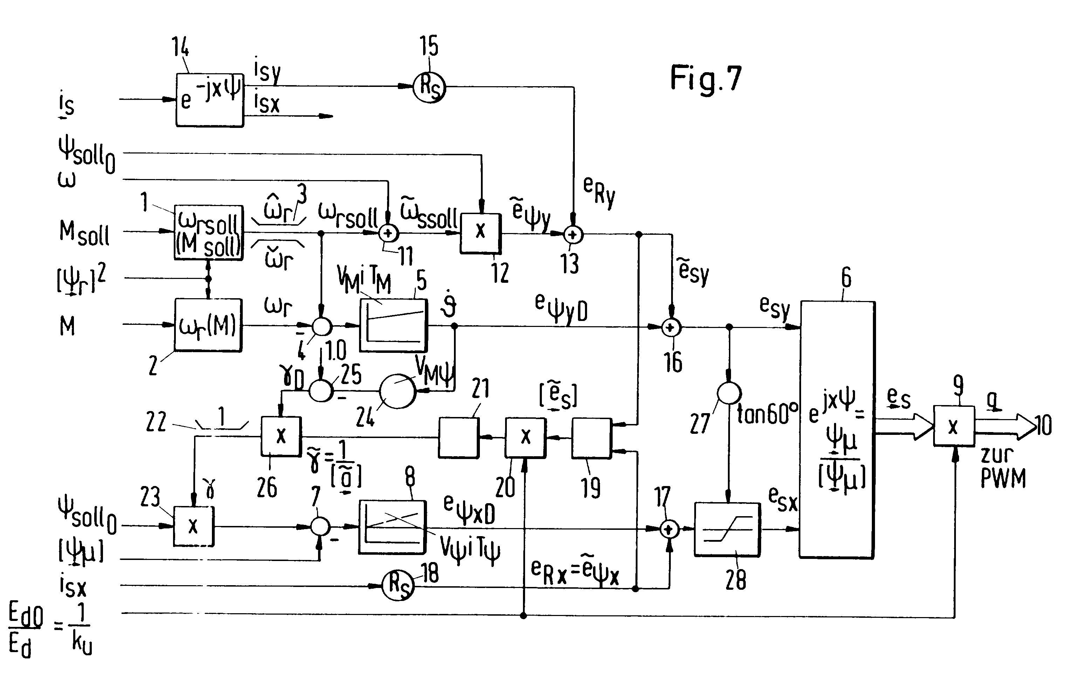

In Figur 7 ist eine Drehmomentregelung mit dynamischer Feldschwächung mit begrenztem Spannungswinkel dargestellt. Die Grundstruktur ist wie unter den Figuren 2, 3 und 6 aufgezeigt. Zusätzlich ist ein Proportionalglied 24 vorgesehen, das das Produkt aus e$\Psi$yD und $V_{M\Psi}$ bildet und einem Subtrahierer 25 zuleitet, wobei $V_{M\Psi}$ eine P-Ver-stärkung darstellt. Der Subtrahierer 25 bildet eine dynamische Feldschwächziffer $\gamma_D$, indem er die Differenz zwischen 1.0 und dem Produkt des Proportionalgliedes 24 errechnet. Ein Multiplizierer 26 bildet das Produkt aus der dynami-schen Feldschwächziffer $\gamma_D$ und der stationären Feldschwächziffer $\tilde{\gamma}$. Dieses Produkt wird mit Hilfe des Begrenzers 22 auf 1 begrenzt und gelangt als Feldschwächziffer $\gamma$ zum Multiplizierer 23, der $\gamma$ mit $\Psi_{\text{soll 0}}$ multipliziert und den so gebildeten Flußsollwert dem Subtrahierer 7 zuführt.

Ein Multiplizierer 27 bildet das Produkt aus e$_{sy}$ und tan 60° und führt dieses einem Rechenglied 28 zu. Dieses Rechenglied 28 realisiert die unter Gleichung (21) angegebene Bedingung und empfängt eingangsseitig das Summensignal des Addierers 17 und gibt ausgangsseitig e$_{sx}$ an den Koordinatentransformator 6 ab.

Mit dem dynamischen Feldschwächregler 24/25/26 wird das vorstehend bereits beschriebene Prinzip der dynamischen Feldschwächung realisiert. Dieser Regler gewichtet die gemäß Gleichung (22) stationär vorgesteuerte Feldschwächziffer mit der dynamischen Feldschwächziffer

$$\gamma_D = 1 - V_{M\Psi} \bullet e_{\Psi yD} \tag{24}$$

Die dynamische Feldschwächziffer wird direkt aus der Stellgröße $e_{\Psi yD}$ des Rotorfrequenzreglers 5 gewonnen. Dessen Stellgröße wird durch das zusätzlich eingefügte Proportionalglied 24 mit der P-Verstärkung $V_{M\Psi}$ abgeschwächt, damit die Stabilität des Drehmomentregelkreises bei dynamischer Feldschwächung gewährleistet bleibt.

Die unter Figur 7 beschriebene Drehmomentregelung mit Spannungsamplitudenverstellung zeichnet sich dadurch aus, daß die bei Verzicht auf dynamische Regelreserve der Ständerspannungsamplitude theoretisch möglichen Drehmomentanregelzeiten nahezu erreicht werden.

Die gute Drehmomentdynamik im Spannungsstellbereich bleibt erhalten, da der Rotorfrequenzregler 5 unvermindert auf die Amplitude der Wechselrichteraussteuerung einwirken kann. Das Überschwingen des Drehmoments kann dadurch praktisch vollständig vermieden werden.

Durch das zusätzliche P-Glied 24 wird berücksichtigt, daß die mittlere Ständerfrequenz pro Pulsperiode im Spannungsstellbereich durch den sprunghaft verstellbaren Ständerspannungsbetrag, im Feldschwächbereich aber nur durch den stetig verstellbaren Gesamtflußbetrag beeinflußt werden kann.

Den Gesamtflußsollwert erhält man schließlich als Produkt aus dem entsprechend Gleichung (23) vorgesteuerten Gesamtflußsollwert und der in Gleichung (24) berechneten dynamischen Feldschwächziffer gemäß

$$\Psi_{soll} = \Psi_{soll\,0} \bullet \tilde{\gamma} \bullet \gamma_D \tag{25}$$

Bei hochausgenutzten Drehfeldantrieben müssen unbedingt Maßnahmen zur Strombegrenzung und zum Kippschutz getroffen werden, wobei das dynamische Verhalten des Antriebs nicht beeinträchtigt werden darf.

Nachfolgend werden geeignete Maßnahmen für die Strombegrenzung und den Kippschutz angegeben. Es wird hier der Ansatz gewählt, beide Schutzeinrichtungen durch geeignete Begrenzung des Rotorfrequenzsollwertes zu realisieren. Dies führt zu Lösungen mit geringem Aufwand, die auch unter Echtzeitbedingungen auf einem Signalprozessor verarbeitet werden können.

Aus dem Ersatzschaltbild der Induktionsmaschine (siehe beispielsweise IEEE Transactions..., Bild 4) kann der Ständerstrom gemäß

$$\underset{\rightarrow}{i}_s = \underset{\rightarrow}{\Psi}_\mu \bullet \left( \frac{1}{L_\mu} + \frac{1}{L_\sigma} \right) - \frac{\underset{\rightarrow}{\Psi}_r}{L_\sigma} \tag{26}$$

berechnet werden. Des weiteren gilt im stationären Betrieb zwischen der Rotorfrequenz und dem Flußwinkel der Zusammenhang

$$\omega_r \bullet T\sigma = \tan \vartheta \tag{27}$$

Der Rotorflußraumzeiger ist dann durch den Flußwinkel und den Gesamtflußraumzeiger gemäß

$$\underset{\rightarrow}{\Psi}_r = \underset{\rightarrow}{\Psi}_\mu \bullet \cos \vartheta \bullet e^{-j\vartheta} \tag{28}$$

bestimmt.

Mit den Gleichungen (26...28) kann der Betrag des Ständerstromraumzeigers als Funktion der Rotorfrequenz und des Rotorflußbetrags entsprechend

$$\left| \underset{\rightarrow}{i}_s \right| = \frac{\left| \underset{\rightarrow}{\Psi}_r \right|}{L_\mu} \bullet \sqrt{1 + \left( \frac{L_\sigma + L_\mu}{Rr} \right)^2 \bullet \omega_r^2} \qquad (29)$$

dargestellt werden.

In Gleichung (29) wird deutlich, daß eine vorgegebene Grenze $\left| i_s \right|_{Max}$ des Ständerstrombetrags bei Begrenzung der Rotorfrequenz $\omega_r$ auf

$$\omega_{rMax} = + \frac{R_r}{L_\mu + L_\sigma} \bullet \sqrt{\frac{\left| \underset{\rightarrow}{i}_s \right|_{Max}^2 \bullet L_\mu^2}{\left| \underset{\rightarrow}{\Psi}_r \right|^2} - 1} \qquad (30a)$$

bzw.

$$\omega_{rMin} = - \frac{R_r}{L_\mu + L_\sigma} \bullet \sqrt{\frac{\left| \underset{\rightarrow}{i}_s \right|_{Max}^2 \bullet L_\mu^2}{\left| \underset{\rightarrow}{\Psi}_r \right|^2} - 1} \qquad (30b)$$

eingehalten wird. Dabei steht das Pluszeichen für die Begrenzung im Motorbetrieb und das Minuszeichen entsprechend für die Begrenzung im Generatorbetrieb.

Der Kippschutz muß so ausgeführt werden, daß eine Regelsinnumkehr sicher verhindert wird, ohne das dynamische Verhalten des Antriebs zu beeinträchtigen. Wie eingangs erwähnt, wird der Kippschutz durch geeignete Begrenzung der Rotorfrequenz realisiert.

Dazu muß zunächst der Verlauf des Drehmoments als Funktion der Rotorfrequenz berechnet werden. Dabei ist es günstig, das Drehmoment auf das sogenannte Bemessungskippmoment pro Polpaar

$$\frac{M_B}{p} = \frac{3}{4 \bullet L_\sigma} \bullet \hat{\Psi}_0^2 \qquad (31)$$

zu beziehen, das mit dem Bemessungsfluß stationär maximal erreicht werden kann. Des weiteren werden Frequenzen entsprechend

$$n = \omega \bullet T_\sigma \qquad (32)$$

auf den Kehrwert der Rotorstreuzeitkonstanten T$\sigma$ bezogen. Durch Einsetzen der Gleichungen (27,28,31,32) in Gleichung (1) erhält man dann das bezogene Drehmoment m bei Vernachlässigung des Spannungsabfalls am Ständerwiderstand $R_S$ als Funktion der bezogenen Rotorfrequenz $n_r$ bei einer bezogenen Drehzahl $n_0$ gemäß

$$m = \frac{n_2^0}{(n + n_r)^2} \bullet \frac{2 \bullet n_r}{1 + n_r^2} \; ; \; n_0 = \omega_0 \bullet T\sigma \; , \; n_r = \omega_r \bullet T_\sigma \qquad (33)$$

Für die exakte Realisierung des Kippschutzes müssen die Rotorfrequenzen bekannt sein, bei denen das motorische Kippmoment $\hat{m}$ bzw. das generatorische Kippmoment $\check{m}$ auftritt. Dazu werden die Extremstellen von Gleichung (33) mit bekannten analytischen Methoden, wie z.B. der cardanischen Formel bestimmt. Auf diese Weise erhält

13

man Lösungsfunktionen, welche die bezogenen Kipprotorfrequenzen $\hat{n}_r$ für den Motorbereich sowie $\breve{n}_r$ für den Generatorbereich als Funktion der bezogenen Drehzahl n enthalten.

Berücksichtigt man, daß die Drehmoment-Rotorfrequenzkennlinien in der Nähe des Kippunktes sehr flach verlaufen, so kann der Kippschutz sehr einfach realisiert werden. Dazu wird die bezogene stationäre Rotorfrequenz $n_r$ stationär im Motorbereich auf den konstanten oberen Grenzwert $\hat{n}_{rm}$ begrenzt, bei dem sich die Grenzkennlinien als Funktionen von $n_r$ für den Betrieb mit maximalem Ständerstrom $|i_s|_{max}$ und maximalem Drehmoment $\hat{m}$ schneiden. Im Generatorbereich wird die bezogene stationäre Rotorfrequenz $n_r$ stationär auf den ebenfalls konstanten unteren Grenzwert $\breve{n}_{rm}$ begrenzt, bei dem sich die Grenzkennlinien für den Betrieb mit maximaler Drehzahl $n_{Max}$ und Betrieb mit minimalem Drehmoment $\breve{m}$ schneiden.

Die Begrenzung der stationären Rotorfrequenz hat keinen Einfluß auf das dynamische Betriebsverhalten, da die Stellgröße $\delta$ des Rotorfrequenzreglers nicht begrenzt wird. Da $\dot{\delta}$ stationär aber null ist, hat dies wiederum keinen Einfluß auf den Kippschutz.

Mit dem vorstehend erläuterten Kippschutz kann das tatsächliche Kippmoment der Maschine fast völlig $(|m_{max}|>0,99 m_{kipp})$ ausgenutzt werden. Bei dem Versuch, dynamisch auf ein zu großes Sollmoment anzuregeln, wird das maximal erreichbare Drehmoment zunächst mit unbeschränkter Dynamik eingestellt. Erst mit dem Absinken des Rotorflusses setzt die Begrenzung des Rotorfrequenzsollwerts $n_{rsoll}$ auf den gemäß dem zuvor beschriebenen Verfahren festgelegten Grenzwert $\hat{n}_{rm}$ ein und das Drehmoment sinkt auf das stationäre Kippmoment ab.

Zu den vorstehenden Erläuterungen ist nachzutragen, daß es sich allgemein bei $i$ um den physikalischen Strom und bei $\breve{i}$ um den auf den Rotorkurzschlußrom $I_\infty$ normierten Strom handelt. Der Rotorkurzschlußstrom $I_\infty = \hat{\Psi}_o/L_\delta$ würde fließen, wenn die Hauptinduktivität auf den Bemessungsfluß $\hat{\Psi}_o$ magnetisiert, der Rotor kurzgeschlossen und der Rotorstrom lediglich durch die Rotorstreuinduktivität $L_\delta$ begrenzt wäre. Diese Normierung des Stromes führt zu einfachen Gleichungen.

**Patentansprüche**

1. Verfahren zur Drehmomentregelung einer durch einen pulsweitenmoduliert angesteuerten Wechselrichter gespeisten Kurzschlußläufer-Asynchronmaschine wobei der Rotorwiderstand ($R_r$) und der Rotenflußraumzeiger ($\Psi_r$) vorherbestimmte Werte haben, <u>dadurch gekennzeichnet,</u> daß Drehmoment-Sollwert ($M_{soll}$) und Drehmoment-Istwert (M) entsprechend

$$\omega_{rsoll}=\frac{2R_r}{3}\bullet\frac{M_{soll}}{\left|\Psi_r\right|^2}$$

und

$$\omega_r=\frac{2R_r}{3}\bullet\frac{M}{\left|\Psi_r\right|^2}$$

in Rechnern in den entsprechenden Rotorkreisfrequenzsollwert ($\omega_{rsoll}$) und die Rotorkreisfrequenz ($\omega_r$) umgerechnet werden, daß das Drehmoment über einen Rotorfrequenzregler und einen Gesamtflußbetragsregler entsprechend

$$e_{Sy}=V_M\bullet(\omega_{rsoll}-\omega_r)+\frac{1}{\tau_M}\bullet\int(\omega_{rsoll}-\omega_r)\,dt$$

und

$$e_{Sx}=V_\Psi\bullet\left(\Psi_{soll}-\left|\underset{\rightarrow}{\Psi}\mu\right|\right)+\frac{1}{\tau_\Psi}\bullet\int\left(\Psi_{soll}-\left|\underset{\rightarrow}{\Psi}\mu\right|\right)dt$$

geregelt wird, und daß aus dem Ständerfrequenzfaktor ($e_{Sy}$) und dem Flußkorrekturfaktor ($e_{Sx}$) mittels eines Koordinatenwandlers (6) der Ständerspannungsraumzeiger ($e_s$) gebildet wird und wobei das Drehmoment, des Motors durch Stellen des Werchselrichterausgangsvektors $e_s$ geregelt wird und wobei

$Rr =$ Rotorwiderstand
$\Psi_r =$ Rotorflußraumzeiger
$V_M, V_\Psi =$ P-Verstärkungen der Regler
$\tau_M, \tau_\Psi =$ Nachstellzeiten der Regler
$\Psi_{soll} =$ Gesamtflußsollwert
$\Psi_\mu =$ Gesamtflußraumzeiger bedeuten.

2. Verfahren nach Anspruch 1, dadurch gekennzeichnet, daß zur Bildung des Ständerspannungsraumzeigers ($e_s$) aus dem Ständerfrequenzfaktor und dem Flußkorrekturfaktor eine Koordinatentransformation bezüglich des Ständerfrequenzfaktors und des Flußkorrekturfaktors entsprechend

$$e^{jx\mu} = \frac{\Psi_\mu}{\left|\Psi_\mu\right|}$$

durchgeführt wird, wobei $x_\mu$ = Phasenlage des Gesamtflußraumzeigers bedeutet.

3. Verfahren nach Anspruch 2, dadurch gekennzeichnet, daß der Ständerspannungsraumzeiger ($e_s$) zur Bildung des Raumzeigers der Wechselrichteraussteuerung ($a$) mit dem Kehrwert des Spannungsfaktors

$$k_u = \frac{E_d}{E_{d0}}$$

multipliziert wird, wobei

$E_D =$ Zwischenkreisgleichspannung
$E_{do} =$ Bemessungszwischenkreisgleichspannung des Werchselrichters bedeuten.

4. Verfahren nach einem der Ansprüche 1 bis 3, dadurch gekennzeichnet, daß aus dem Rotorkreisfrequenzsollwert ($\omega_{rsoll}$) und der elektrischen Drehzahl ($\omega$) der stationäre Ständerkreisfrequenzsollwert ($\tilde{\omega}_{ssoll}$) gebildet wird, daß dieser Sollwert mit dem Bemessungsgesamtflußsollwert ($\Psi_{\mu sollo}$) multipliziert wird, daß die so erhaltene, stationäre, zum Gesamtflußraumzeiger orthogonale Komponente ($\tilde{e}_{\Psi y}$) des Magnetisierungsspannungsraumzeigers ($e_\Psi$) mit dem zum Gesamtflußraumzeiger orthogonalen Anteil ($e_{Ry}$) des Spannungsabfalls ($e_R$) über dem Ständerwiderstand summiert wird und daß der so enthaltene stationäre Ständerfrequenzfaktor ($\tilde{e}_{sy}$) zu dem vom Rotorfrequenzregler gebildeten dynamischen Ständerfrequenzfaktoranteil

$$\left( \dot{\vartheta} = e_{\Psi yD} \right)$$

addiert wird.

5. Verfahren nach Anspruch 4, dadurch gekennzeichnet, daß zum vom Gesamtflußbetragregler gebildeten dynamischen Flußkorrekturfaktoranteil ($e_{\Psi xD}$) ein zum Gesamtflußraumzeiger paralleler Anteil des Spannungsabfalls ($e_R$) über dem Ständerwiderstand als stationärer Flußkorrekturfaktor ($e_{Rx}$) addiert wird.

6. Verfahren nach den Ansprüchen 4 und 5, dadurch gekennzeichnet, daß der stationäre Ständerspannungsraumzeiger-Betrag ($|e_s|$) aus dem stationären Ständerfrequenzfaktor ($\tilde{e}_{sy}$) und dem stationären Flußkorrekturfaktor ($e_{Rx}$) gebildet wird, daß entsprechend

$$\tilde{\gamma} = \frac{1}{\left|\underset{\rightarrow}{\tilde{a}}\right|} = Ku \bullet \frac{\hat{e}_o}{\left|\underset{\rightarrow}{\tilde{e}}_s\right|}$$

eine stationäre Feldschwächziffer $(\tilde{\gamma})$ gebildet wird, daß diese Feldschwächziffer auf Werte kleiner als eins begrenzt wird und daß der Bemessungs-Flußsollwert ($\Psi_{sollo}$) mit dieser begrenzten Felschwächziffer multipliziert wird, wobei $\hat{e}_o$ = Bemessungsständerspannung, $\underset{\rightarrow}{\tilde{a}}$ = stationärer Raumzeiger der Wechselrichteraussteuerung bedeuten.

7. Verfahren nach Anspruch 6, dadurch gekennzeichnet, daß die stationäre Feldschwächziffer $(\tilde{\gamma})$ mit einer dynamischen Feldschwächziffer $\gamma_D = 1 - V_{M\Psi} \bullet e_{\Psi yD}$ multipliziert wird, wobei $V_{M\Psi}$ =P-Verstärkung, bedeutet.

8. Verfahren nach Anspruch 7, dadurch gekennzeichnet, daß der Betrag des Spannungswinkels ($\delta_u$) zwischen dem Ständerspannungsraumzeiger $(e_s)$ und dem um +90° gedrehten Gesamtflußraumzeiger $(\Psi_\mu)$ auf etwa 60° begrenzt wird.

9. Verfahren nach einem der Ansprüche 1 bis 8, dadurch gekennzeichnet, daß zur Strombegrenzung der Rotorkreisfrequenzsollwert auf

$$\omega_{rMax} = + \frac{R_r}{L_\mu + L_\sigma} \bullet \sqrt{\frac{\left|\underset{\rightarrow}{i}_s\right|^2_{Max} \bullet L_\mu^2}{\left|\underset{\rightarrow}{\Psi}_r\right|^2} - 1}$$

im motorischen Betrieb und auf

$$\omega_{rMin} = - \frac{R_r}{L_\mu + L_\sigma} \bullet \sqrt{\frac{\left|\underset{\rightarrow}{i}_s\right|^2_{Max} \bullet L_\mu^2}{\left|\underset{\rightarrow}{\Psi}_r\right|^2} - 1}$$

im generatorischen Betrieb begrenzt wird, wobei folgende Abkürzungen gelten:

$L_\mu =$ Magnetisierungsinduktivität,
$L_\sigma =$ Streuinduktivität,
$\left|\underset{\rightarrow}{i}_s\right|_{Max} =$ vorgegebene Grenze des Ständerstromraumzeiger-Betrags.

10. Verfahren nach einem der Ansprüche 1 bis 9, dadurch gekennzeichnet, daß für den Kippschutz die auf den Kehrwert der Rotorstreuzeitkonstante bezogene stationäre Rotorfrequenz ($n_r$) stationär im motorischen Betrieb auf den konstanten oberen Grenzwert ($\hat{n}_m$) begrenzt wird, bei dem sich die Grenzkennlinien für den Betrieb mit maximalem Ständerstrom $(|\Psi_s|_{Max})$ und Betrieb mit maximalem Drehmoment ($\hat{m}$) schneiden und daß die auf den Kehrwert der Rotorstreuzeitkonstante bezogene stationäre Rotorfrequenz ($n_r$) stationär im generatorischen Betrieb auf den konstanten unteren Grenzwert $(\check{n}_m)$ begrenzt wird, bei dem sich die Grenzkennlinien für den Betrieb mit maximaler Drehzahl ($n_{Max}$) und Betrieb mit minimalem Drehmoment $(\check{m})$ schneiden.

## Claims

1. A method for the torque regulation of a squirrel-cage rotor asynchronous machine fed by an inverter controlled by pulse-width modulation, wherein the rotor resistance ($R_r$) and the rotor flux space vector ($\Psi_r$) have predetermined values, characterised in that the desired torque value ($M_{soll}$) and the actual torque value (M) are converted in computers into the corresponding desired rotor circuit frequency value ($\omega_{rsoll}$) and the rotor circuit frequency ($\omega_r$) as expressed by

$$\omega_{rsoll} = \frac{2R_r}{3} \bullet \frac{M_{soll}}{|\Psi_r|^2}$$

and

$$\omega_r = \frac{2R_r}{3} \bullet \frac{M}{|\Psi_r|^2},$$

in that the torque is regulated via a rotor frequency regulator and a total flux quantity regulator as expressed by

$$e_{Sy} = V_M \bullet (\omega_{rsoll} - \omega_r) + \frac{1}{\tau_M} \bullet \int (\omega_{rsoll} - \omega_r) \, dt$$

and

$$e_{Sx} = V_\Psi \bullet \left( \Psi_{soll} - \left| \underset{\rightarrow}{\Psi} \mu \right| \right) + \frac{1}{\tau_\Psi} \bullet \int \left( \Psi_{soll} - \left| \underset{\rightarrow}{\Psi} \mu \right| \right) dt$$

and in that the stator voltage space vector $(\underline{e_s})$ is formed from the stator frequency factor ($e_{Sy}$) and the flux correction factor ($e_{Sx}$) by means of a coordinate converter (6) and the torque of the motor is regulated by adjusting the inverter output vector $(\underline{a})$ and wherein

| | |
|---|---|
| Rr | signifies the rotor resistance |
| $\underset{\rightarrow}{\Psi}_r$ | signifies the rotor flux space vector |
| $V_M, V_\Psi$ | signifies P-gains of the regulators, |
| $\tau_M, \tau_\Psi$ | signifies reset times of the regulators, |
| $\Psi_{soll}$ | signifies the desired total flux value |
| $\underset{\rightarrow}{\Psi}_\mu$ | signifies the total flux space vector. |

2. A method according to claim 1, characterised in that, in order to form the stator voltage space vector $(\underline{e_s})$ from the stator frequency factor and the flux correction factor, a coordinate transformation with respect to the stator frequency factor and the flux correction factor is effected as expressed by

$$e^{jx_\mu} = \frac{\underset{\rightarrow}{\Psi}_\mu}{\left| \underset{\rightarrow}{\Psi}_\mu \right|}$$

wherein $x_\mu$ signifies the phase position of the total flux space vector.

3. A method according to claim 2, characterised in that, to form the space vector of the inverter modulation $(\underline{a})$, the stator voltage space vector $(\underline{e_s})$ is multiplied by the reciprocal of the voltage factor

$$k_u = \frac{E_d}{E_{d0}}$$

wherein

$E_D$ signifies the intermediate circuit direct voltage
$E_{d0}$ signifies the rated intermediate circuit direct voltage of the inverter.

**4.** A method according to one of claims 1 to 3, characterised in that the desired stationary stator circuit frequency value $(\hat{\omega}_{soll})$ is formed from the desired rotor circuit frequency value $(\omega_{rsoll})$ and the electrical rotational speed $(\omega)$, in that this desired value is multiplied by the rated total flux desired value $(\Psi_{\mu soll0})$, in that the stationary component $(\tilde{e}_{\Psi y})$ of the magnetizing voltage space vector $(e^{\Psi})$ thus obtained, orthogonal to the total flux space vector, is summed with the component $(e_{Ry})$ of the voltage drop $(e^R)$ orthogonal to the total flux space vector via the stator resistance, and in that the stationary stator frequency factor $(\tilde{e}_{sy})$ thus obtained is added to the dynamic stator frequency factor component $(\dot{\vartheta}=e_{\Psi yD})$ formed by the rotor frequency regulator.

**5.** A method according to claim 4, characterised in that to the dynamic flux correction factor component $(e_{\Psi xD})$ formed by the total flux quantity regulator is added a component of the voltage drop $(e_r)$ parallel to the total flux space vector via the stator resistance, as a stationary flux correction factor $(e_{Rx})$.

**6.** A method according to claims 4 and 5, characterised in that from the stationary stator frequency factor $(\tilde{e}_{sy})$ and the stationary flux correction factor $(e_{Rx})$ is formed the stationary stator voltage space vector quantity $(|\underline{e}_s|)$ in that a stationary field weakening digit $(\bar{\gamma})$ is formed as expressed by

$$\bar{\gamma} = \frac{1}{|\bar{a}|} = Ku \bullet \frac{\hat{e}_0}{|\bar{e}_s|}$$

in that this field weakening digit is limited to values smaller than one and in that the rated flux desired value $(\Psi_{soll0})$ is multiplied by this limited field weakening digit, wherein $\hat{e}_0$ signifies the rated stator voltage, $\bar{a}$ signifies the stationary space vector of the inverter modulation.

**7.** A method according to claim 6, characterised in that the stationery field weakening digit $(\bar{\gamma})$ is multiplied by a dynamic field weakening digit $\gamma_D = 1 - V_{M\Psi} \bullet e_{\Psi yD}$, wherein $V_{M\Psi}$ signifies P-gain.

**8.** A method according to claim 7, characterised in that the value of the voltage angle $(\delta_u)$ between the stator voltage space vector $(e_s)$ and the total flux space vector $(\Psi_r)$ rotated around $+90°$ is limited to about $60°$.

**9.** A method according to one of claims 1 to 8, characterised in that, for current limitation, the desired rotor circuit frequency value is limited to

$$\omega_{rMax} = +\frac{R_r}{L_\mu \div L_\sigma} \bullet \sqrt{\frac{|\underline{i}_s|_{Max}^2 \bullet L_\mu^2}{|\underline{\Psi}_r|^2} - 1}$$

in the engine operation and to

$$\omega_{rMin} = -\frac{R_r}{L_\mu \div L_\sigma} \bullet \sqrt{\frac{|\underline{i}_s|_{Max}^2 \bullet L_\mu^2}{|\underline{\Psi}_r|^2} - 1}$$

in the generator operation, wherein the following abbreviations apply:

$L_\mu =$    magnetizing inductance
$L_\sigma =$    leakage inductance
$|\underline{i}_s|_{Max} =$    preset limit of the stator current space vector value.

**10.** A method according to one of claims 1 to 9, characterised in that, for breakdown protection, the stationary rotor frequency ($n_r$) related to the reciprocal of the rotor leakage time constant is limited stationarily in the engine operation to the constant upper limit value ($\hat{n}_m$) in which the limiting characteristics for the operation with maximum stator current ($|\underline{i}_s|_{max}$) and operation with the maximum torque ($\hat{m}$) intersect, and in that the stationary rotor frequency ($n_r$) related to the reciprocal of the rotor leakage time constant is limited stationarily in the generator operation to the constant lower limit value ($\tilde{n}_m$) in which the limiting characteristics for the operation with maximum rotational speed ($n_{Max}$) and operation with minimum torque ($\tilde{m}$) intersect.

## Revendications

**1.** Procédé pour réguler le couple d'une machine asynchrone à rotor en court-circuit, alimentée par un onduleur excité par modulation d'impulsions en largeur, la résistance du rotor ($R_r$) et l'indicateur de capacité de flux du rotor ($\Psi_r$) ayant des valeurs prédéterminées, caractérisé

en ce que la valeur de consigne ($M_{cons}$) du couple et la valeur effective ($M$) du couple sont converties selon

$$\omega_{rcons} = \frac{2R_r}{3} \bullet \frac{M_{cons}}{|\Psi_r|^2}$$

et

$$\omega_r = \frac{2R_r}{3} \bullet \frac{M}{|\Psi_r|^2}$$

dans des ordinateurs en la valeur de consigne de la fréquence angulaire du rotor ($\omega_{rcons}$) et la fréquence angulaire du rotor ($\omega_r$), en ce que le couple, par l'intermédiaire d'un régulateur de fréquence du rotor et d'un régulateur de quantité de flux total, est régulé selon

$$e_{Sy} = V_M \bullet (\omega_{rcons} - \omega_r) + \frac{1}{\tau_m} \bullet \int (\omega_{rcons} - \omega_r)dt$$

et

$$e_{sx} = V_\Psi \bullet \left(\Psi_{cons} - |\underline{\Psi\mu}|\right) + \frac{1}{\tau_\Psi} \bullet \int \left(\Psi_{cons} - |\underline{\Psi\mu}|\right)dt \, ,$$

et en ce que l'indicateur de capacité de tension du stator ($\underline{e}_s$) est composé à partir du facteur de fréquence du stator ($e_{Sy}$) et du facteur de correction de flux ($e_{Sx}$) au moyen d'un convertisseur de coordonnées (6), et où le couple du moteur est régulé en réglant le vecteur de sortie de l'onduleur ($\underline{a}$), et où les abréviations suivantes signifient :

| | |
|---|---|
| $R_r =$ | résistance du rotor |
| $\underline{\Psi}_r =$ | indicateur de capacité de flux du rotor |
| $V_M, V_\Psi =$ | amplifications proportionnelles du régulateur |
| $\tau_M, \tau_\Psi =$ | temps de compensation du régulateur |
| $\Psi_{cons} =$ | valeur de consigne de flux total |
| $\underline{\Psi}_\mu =$ | indicateur de capacité de flux total. |

**2.** Procédé selon la revendication 1, caractérisé en ce que, pour composer l'indicateur de capacité de tension du stator ($\underline{e}_s$) à partir du facteur de fréquence du stator et du facteur de correction de flux, une transformation de coordonnées concernant le facteur de fréquence du stator et du facteur de correction de flux est effectuée selon

$$e^{jX_\mu} = \frac{\underline{\Psi}_\mu}{\left|\underline{\Psi}_\mu\right|}$$

où

$X_\mu$ = relation des phases de l'indicateur de capacité de flux total.

3. Procédé selon la revendication 2, caractérisé en ce que l'indicateur de capacité de tension du stator $(\underline{e}s)$, pour composer l'indicateur de capacité de la modulation de l'onduleur $(\underline{a})$, est multiplié par la valeur réciproque du facteur de tension

$$k_u = \frac{E_d}{E_{d0}}$$

où

$E_D$ = tension continue indirecte
$E_{d0}$ = tension continue indirecte de calcul de l'onduleur.

4. Procédé selon l'une quelconque des revendications 1 à 3, caractérisé en ce que la valeur de consigne stationnaire de la fréquence angulaire du stator $(\tilde{\omega}_{scons})$ est composée à partir de la valeur de consigne $(\omega)$ de la fréquence angulaire du rotor $(\omega_{rcons})$ et du couple électrique $(\omega)$, en ce que cette valeur de consigne est multipliée par la valeur de consigne du flux total de calcul $(\Psi_{\mu cons0})$, en ce que la composante stationnaire $(\tilde{e}_{\Psi y})$, orthogonale par rapport à l'indicateur de capacité de flux total de l'indicateur de capacité de tension d'aimantation $(e\Psi)$, est totalisée avec la fraction $(e_{Ry})$ de la chute de tension $(\underline{e}R)$, orthogonale par rapport à l'indicateur de capacité de flux total, sur la résistance du stator, et en ce que le facteur de fréquence stationnaire du stator $(\tilde{e}sy)$ ainsi obtenu est additionné à la fraction dynamique du facteur de fréquence du stator $(\dot{\vartheta} = e_{\Psi yD})$, constituée par le régulateur de fréquence du rotor.

5. Procédé selon la revendication 4, caractérisé en ce que l'on additionne à la fraction dynamique du facteur de correction de flux $(e\Psi_{xD})$, constituée par le régulateur de quantité de flux total, une fraction de la chute de tension $(\underline{e}x)$, parallèle à l'indicateur de capacité de flux total, sur la résistance du stator comme un facteur stationnaire de correction de flux $(e_{Rx})$.

6. Procédé selon les revendications 4 et 5, caractérisé en ce que la quantité de l'indicateur de capacité de tension du stator $(|\tilde{e}_s|)$ est composée à partir du facteur stationnaire de la fréquence du stator $(\tilde{e}_{sy})$ et le facteur stationnaire de correction de flux $(e_{Rx})$, en ce que selon

$$\tilde{\gamma} = \frac{1}{|\underline{\tilde{a}}|} = Ku \bullet \frac{\hat{e}_0}{|\underline{\tilde{e}}_s|}$$

un chiffre d'affaiblissement de champ $(\tilde{\gamma})$ est composé, en ce que ce chiffre d'affaiblissement de champ est limité à des valeurs inférieures à un, et en ce que la valeur de consigne du flux de calcul $(\Psi_{cons0})$ est multipliée par ce chiffre d'affaiblissement de champ limité, où

$\dot{\underline{e}}_s$ = tension de calcul du stator,
$\underline{\tilde{a}}$ = indicateur de capacité stationnaire de la modulation de l'onduleur.

7. Procédé selon la revendication 6, caractérisé en ce que le chiffre stationnaire d'affaiblissement de champ $(\tilde{\gamma})$ est multiplié par un chiffre dynamique d'affaiblissement de champ $\gamma_\rho = 1 - V_{M\Psi} \bullet e_{\Psi yD}$, où $V_{M\Psi}$ = amplification proportionnelle.

**8.** Procédé selon la revendication 7, caractérisé en ce que la quantité de l'angle de tension ($\delta_\mu$) entre l'indicateur de capacité de tension du stator ($\underline{e}_s$) et l'indicateur de capacité de flux total ($\underline{\Psi}_s$), tourné de +90°, est limitée à environ 60°.

**9.** Procédé selon l'une quelconque des revendications 1 à 8, caractérisé en ce que, pour limiter le courant, la valeur de consigne de la fréquence angulaire du rotor est limitée à

$$\omega_{rMax} = + \frac{R_r}{L_\mu + L_\sigma} \bullet \sqrt{\frac{\left|\underline{i}_s\right|_{Max}^2 \bullet L_\mu^2}{\left|\underline{\Psi}_r\right|^2} - 1}$$

en cas d'entraînement par moteur, et à

$$\omega_{rMin} = - \frac{R_r}{L_\mu + L_\sigma} \bullet \sqrt{\frac{\left|\underline{i}_s\right|_{Max}^2 \bullet L_\mu^2}{\left|\underline{\Psi}_r\right|^2} - 1}$$

en cas d'entraînement par générateur, où les abréviations suivantes sont appliquées :

$L_\mu$ = inductance d'aimantation,
$L_\sigma$ = inductance de dispersion,
$\left|\underline{i}_s\right|_{Max}$ = limite donnée de la quantité de l'indicateur de courant du stator.

**10.** Procédé selon l'une quelconque des revendications 1 à 9, caractérisé en ce que, pour la protection contre le renversement, la fréquence stationnaire du rotor ($n_r$), relative à la valeur réciproque de la constante de temps de dispersion du rotor, est limitée de façon stationnaire en cas d'entraînement par moteur à la valeur limite supérieure constante ($\hat{n}_{rm}$), où se coupent les courbes caractéristiques limites pour le fonctionnement avec un courant de stator maximal ($\underline{i}_{sMax}$) et le fonctionnement avec un couple maximal ($\hat{m}$), et en ce que la fréquence stationnaire du rotor ($n_r$), relative à la valeur réciproque de la constante de temps de dispersion du rotor, est limitée de façon stationnaire en cas d'entraînement par générateur à la valeur limite inférieure constante ($\check{n}_{rm}$), où se coupent les courbes caractéristiques limites pour le fonctionnement avec une vitesse de rotation maximale ($n_{Max}$) et le fonctionnement avec un couple minimal ($\check{m}$).

EP 0 674 381 B1

Fig.1

Fig.4

22

Fig.2

Fig.3

## Fig.5

Fig.6

Fig.7